# EUROPEAN PATENT SPECIFICATION

(11) **EP 0 328 694 B1**
(45) Date of publication and mention of the grant of the patent: **29.06.1994**
(21) Application number: 88907828.3
(22) Date of filing: 31.08.1988
(51) Int. Cl.: B23Q 35/127

(54) **NON-CONTACT PROFILING METHOD**
KONTAKTFREIES PROFILIERUNGSVERFAHREN
PROCEDE DE PROFILAGE SANS CONTACT

(30) Priority: 02.09.1987 JP 219746/87
(43) Date of publication of application: 23.08.1989
(73) Proprietor: FANUC LTD., Minamitsuru-gun, Yamanashi 401-05 (JP)
(72) Inventor: MATSUURA, Hitoshi, 412-7, Midori-cho Hachioji-shi Tokyo 193 (JP)
(74) Representative: Billington, Lawrence Emlyn
(86) International application number: PCT/JP88/00863
(87) International publication number: WO 89/01845

(56) References cited:
- EP-A- 0 187 934
- JP-A-61 274 852
- US-A- 4 479 717
- US-A- 4 708 483
- PATENT ABSTRACTS OF JAPAN vol. 011, no. 164 (P-580)27 May 1987

## Description

### Technical Field

This invention relates to a contactless profiling method and, more particulrly, to a contactless profiling method for tracing a model surface while performing attitude control in such a manner that the optic axis of a contactless probe, which is capable of simultaneously measuring distances to three points on the model surface, is pointed in the direction of a line normal to the model surface at all times.

### Background Art

In conventional tracer control, a stylus is moved while made to contact a model, tracing velocity is generated along each axis by performing tracing computations using three-dimensional axial deviations produced by a tracer head due to contact between the stylus and the model, and the model is traced, while the stylus is made to contact the model surface, in accordance with the velocity signals along the respective axes.

Highly accurate tracer control can be performed even with this contactless profiling method. However, since the stylus contacts the model, the stylus sustains wear and is required to be replaced unless the tracing velocity is made to exceed a certain value. Highly accurate tracer control will no longer be possible if the stylus is not replaced. Accordingly, a contactless tracer control method has been proposed in which a model surface is traced by a distance measuring probe capable of measuring distance in contactless fashion.

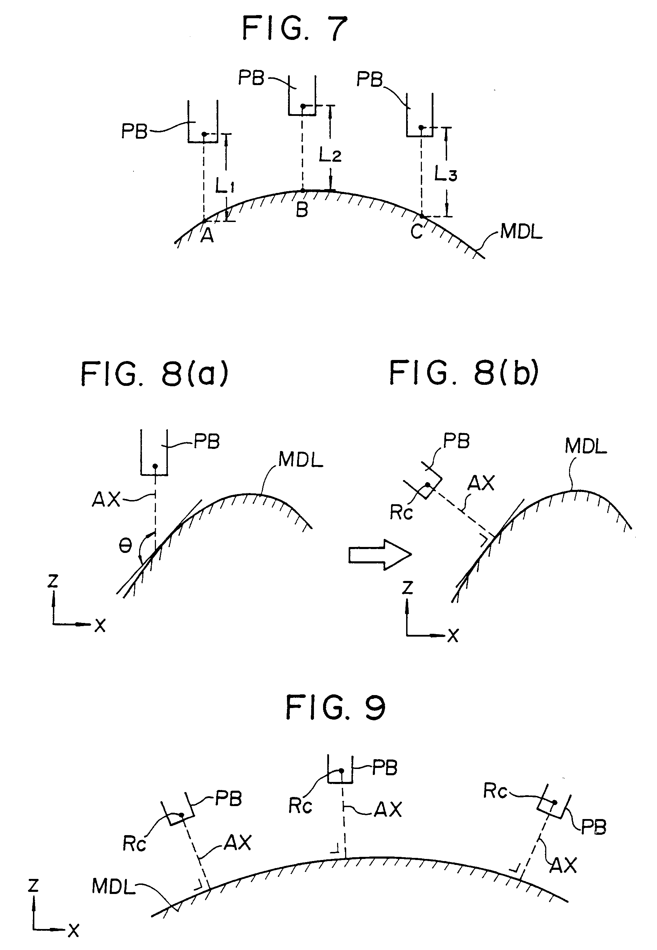

Fig. 7 is a view for describing the general features of this contactless profiling method. Contactless profiling refers to a profiling method in which the probe is made to trace the surface of a model MDL without contacting it by making use of a probe sensor (a distance measuring probe) PB, which is capable of measuring distance contactlessly as in the manner of a laser distance measuring probe. This contactless-type distance measuring probe PB generally possesses a reference distance L₀ and is so adapted that the difference between an actually measured distance L and the reference distance L₀ is capable of being outputted as an error quantity ΔL. A probe which employs, e.g., an optical triangulation distance measuring method, is available as the contactless-type distance measuring probe. In a probe of this kind, laser light produced by a light-emitting element (a semiconductor laser) irradiates the model surface via a projecting lens, and part of the light beam scattered and reflected at such time forms a spot on a position detecting element via a light-receiving lens. The position of the spot varies depending upon the distance to the model surface, thereby allowing measurement of the distance.

Assume that the model MDL shown in Fig. 7 is to be profiled, and that points A, B, C are suitably selected sampling points (measurement points). When a distance $\text{L₁ (= L₀ + ΔL₁)}$ at point A is measured and gives an error of ΔL₁ in comparison with the reference distance L₀, the probe is directed to the next sampling point B while a corrective operation is applied along the measurement axis (along the optic axis) in an amount corresponding to the error. An error quantity ΔL₂ is then obtained at the point B and the probe is directed to point C so as to similarly apply a correction corresponding to this error. By subsequently repeating identical processing, the model surface can be traced contactlessly while the distance L₀ is maintained.

The above-described contactless-type distance measuring probe is capable of measurement in one dimension only, namely along the measurement axis. As a consequence, the larger an angle ϑ between the measurement optic axis AX and the model surface, as shown in Fig. 8(a), the more the accuracy with which distance is measured deteriorates, giving rise to a range within measurement is impossible. With the proposed contactless-type profiling method, therefore, the profiling range is limited. When the angle ϑ becomes too large, contactless profiling can no longer be applied.

In order to mitigate this limitation as much as possible, the probe PB should be rotated through a predetermined angle about its rotational axis R_{C} in the tracing plane (e.g., the X-Z plane) to control the measurement optic axis AX in such a manner that it will lie at right angles to the model surface at all times, as shown in Figs. 8(b) and 9, and the measurement optic axis should be controlled so as to be perpendicular to the model surface even where it is cut by a plane (the Y-Z plane) perpendiculr to the tracing plane. In other words, if the optic axis is controlled so as to point along the direction of the normal to the model surface at all times, distance can be measured accurately at all times irrespective of the model shape and the range over which contactless profiling is possible can be enlarged.

However, an effective method of performing contactless profiling while pointing the optic axis in the direction of a line normal to a model surface has not yet been proposed.

The present invention has been devised in view of the foregoing problems encountered in the prior art and its object is to provide a contactless profiling method through which profiling can be performed while the optic axis of a contactless probe is pointed along the direction of a normal to a model surface.

### Disclosure of the Invention

The present invention relates to a contactless profiling method for tracing a model surface while performing attitude control in such a manner that an optic axis of a contactless probe, which is capable of simultaneously measuring distances to three points on the model surface, is pointed along the direction of a line normal to the model surface at all times. In accordance with the contactless profiling method, model normal line direction N at a measurement point A is calculated from an inclination angle increment in a probe feed direction (X direction), which is obtained using distances L₁, L₂ to two points A, B in the probe feed direction measured every predetermined sampling time T_{S}, and an inclination angle increment in a perpendicular direction (Y direction) obtained using two points A, C in the perpendicular direction.

Next, total incremental quantities every sampling time T_{S} along the three axes of the rectangular coordinate system and the two axes of probe rotation are calculated by using (i) incremental quantities found along three axes of a rectangular coordinate system and two axes of probe rotation, these incremental quantities being necessary for pointing the optic axis along the normal line direction in a state where the measurment point A, which is a point of intersection between the optic axis of first distance measuring means and the model surface, is fixed; (ii) incremental quantities found in the feed direction (X direction) and profiling direction (Z direction), every predetermined sampling time T_{S}, determined from tracing velocity and inclination angle in the probe feed direction; and (iii) a Z-axis component of an error between the distance L₁, which is measured by the first distance measuring means every sampling time T_{S}, and a reference distance L₀. By performing simultaneous five-axis control using these total incremental quantities along the respective axes, the model is profiled while the optic axis is pointed along the direction of the line normal to the surface of the model.

### Brief Description of the Drawings

Fig. 1 is a view for describing the general features of the present invention;
Figs. 2 through 5 are views for describing the method of the present invention, in which Fig. 2 is a view for describing an increment in an angle of inclination, Fig. 3 is a view for describing a method of computing incremental quantities along respective axes for pointing an optic axis along the direction of a normal line, and Figs. 4 and 5 are views for describing a method of computing incremental quantities for making a contactless probe trace a model;
Fig. 6 is a block diagram of a system for practicing the method of the invention; and
Figs. 7 through 9 are views for describing the general features and problems of contactless profiling.

### Best Mode for Carrying Out the Invention

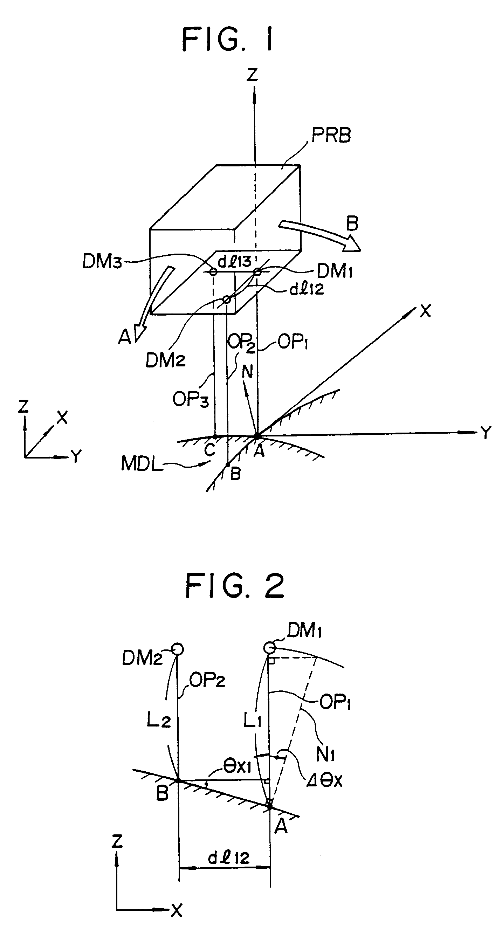

The present invention is such that contactless profiling is performed while an optic axis is pointed along the direction of a line normal to the surface of a model. The contactless profiling method of the invention will now be described with reference to Figs. 1 through 5.

Fig. 1 is a view for describing the general features of the present invention, in which PRB denotes a contactless-type distance measuring probe, MDL a model, DM1 through DM3 optical-type distance measuring means, OP1 through OP3 optic axes of the optical-type distance measuring means, and A through C points measured by the distance measuring means DM1 through DM3. The XZ plane is a profiling plane in surface profiling. The X direction is probe feed direction, and the Z direction is the profiling direction. The YZ plane is a perpendicular cross section perpendicular to the profiling plane. Though the optical-type distance measuring means DM1 through DM3 are indicated merely by the circle marks for convenience sake, each is so constructed that laser light produced by a light-emitting element (a semiconductor laser) irradiates the model surface via a projecting lens, with part of the light beam scattered and reflected at such time forming a spot on a position detecting element via a light-receiving lens. The position of the spot varies depending upon the distance to the model surface, thereby allowing measurement of the distance.

The distance measuring probe PRB is provided with the first through third optical-type distance measuring means DM1 - DM3 so that the distances to at least the three points A - C on the model MDL can be measured simultaneously. The first and second optical-type distance measuring means DM1, DM2 are arranged parallel to the probe feed direction (X direction) and are spaced apart from each other by a distance dℓ₁₂. The third optical-type distance measuring means DM3 is arranged at a distance dℓ₁₃ from the first optical-type distance measuring means DM1 in a direction (Y direction) perpendicular to the probe feed direction.

Fig. 2 is a view for describing a computation method through which an increment Δϑₓ of the angle of inclination of a normal line in the probe feed direction (X direction) is computed using distances L₁, L₂ to the model surface measured by the two distance measuring means DM1, DM2 juxtaposed in the probe feed direction. Based on the drawing, the increment Δϑₓ of the angle of inclination is obtained as

${\text{Δϑ}}_{\text{x}} \text{= tan⁻¹(L₁-L₂)/dℓ₁₂ (1)}$

Similarly, an increment Δϑ_{y} of the angle of inclination of the normal line in the Y direction is obtained by

${\text{Δϑ}}_{\text{y}} \text{= tan⁻¹(L₁-L₃)/dℓ₁₃ (2)}$

using distances L₁, L₃ to the model surface measured by the two distance measuring means DM1, DM3 juxtaposed in the direction (Y direction) perpendicular to the probe feed direction.

Accordingly, assume that the optic axis OP1 is pointing along the direction of the line normal to the model surface at a certain sampling time T₁ and that the angles of inclination along the X and Y directions at this time are ϑₓ₁, ϑ_{y1}, respectively. If the optic axis OP1 is moved by contactless profiling along the model surface without causing the direction of this optic axis to change, so that the state indicated by the solid line in Fig. 2 is obtained at the next sampling time T₂ (= T₁ + T_{S}, where T_{S} is the sampling period), then the angle of inclination ϑₓ₂ in the X direction and the angle of inclination ϑ_{y2} in the Y direction at point A will be as follows, respectively:

${\text{ϑ}}_{\text{x2}} {\text{= ϑ}}_{\text{x1}} {\text{+ Δϑ}}_{\text{x}} \text{(3)}$

${\text{ϑ}}_{\text{y2}} {\text{= ϑ}}_{\text{y1}} {\text{+ Δϑ}}_{\text{y}} \text{(4)}$

It will suffice to point the optic axis in this direction.

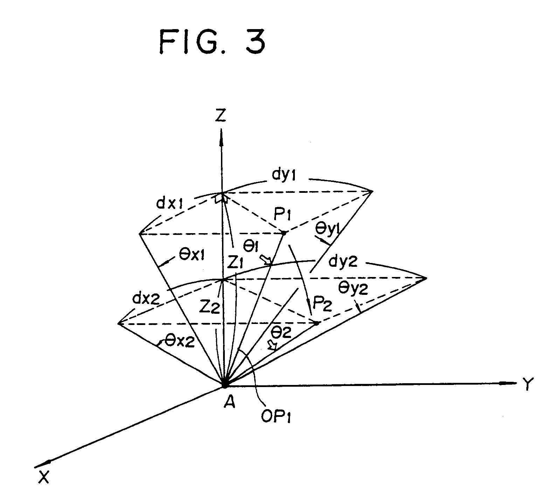

Fig. 3 is an explanatory view showing the optic axis OP1 at measurement point A before and after this axis is pointed along the direction of the normal line. Point P₁ and angle ϑ₁ respectively represent the center of rotation of the optic axis OP1, namely a point about which the probe is rotated, and an angle defined by the optic axis OP1 and the Z axis, before the optic axis is pointed along the normal direction. Point P₂ and angle ϑ₂ respectively represent the center of rotation of the optic axis OP1 and an angle defined by the optic axis OP1 and the Z axis after the optic axis is pointed along the normal direction. It should be noted that the three-dimensional coordinate system is so established that the point of intersection (measurement point) A between the optic axis OP1 and the model surface becomes the origin of the coordinate system. Also, ϑₓ₁, ϑ_{y1}, ϑₓ₂, ϑ_{y2} are angles measured from the Z axis and given by Eqs. (1) through (4), respectively.

As will be obvious from Fig. 3, the angles ϑ ₁, ϑ ₂ are given by the following equations:

ϑ₁ = tan⁻¹ (√t̅a̅n̅²̅ϑ̅ₓ̅₁̅ +̅ t̅a̅n̅²̅ϑ̅_̅{̅y̅1̅}̅) (5)

ϑ₂ = tan⁻¹ (√t̅a̅n̅²̅ϑ̅ₓ̅₂̅ +̅ t̅a̅n̅²̅ϑ̅_̅{̅y̅2̅}̅) (6)

Accordingly, the Z coordinates Z₁, Z₂ of the rotational centers P₁, P₂ are given by the following:

$\text{Z₁ = L₁·cosϑ₁ (7)}$

$\text{Z₂ = L₁·cosϑ₂ (8)}$

(where L₁ is the distance to the measurement point A). The X, Y coordinates dx₁, dy₁, dx₂, dy₂ of the rotational centers P₁, P₂ are given by the following:

${\text{dx₁ = L₁·cosϑ₁·tanϑ}}_{\text{x1}} \text{(9)}$

${\text{dy₁ = L₁·cosϑ₁·tanϑ}}_{\text{y1}} \text{(10)}$

${\text{dx₂ = L₁·cosϑ₂·tanϑ}}_{\text{x2}} \text{(11)}$

${\text{dy₂ = L₁·cosϑ₂·tanϑ}}_{\text{y2}} \text{(12)}$

From the above, incremental quantities Δx, Δy, Δz, Δ ϑₓ, Δ ϑ_{y} along the three axes of the rectangular coordinate system and along the two axes of rotation of the probe, which quantities are necessary for pointing the optic axis OP1 along the direction of the normal line without moving the measurement point that is the point of intersection between the optic axis OP1 and the model surface, are obtained as follows: 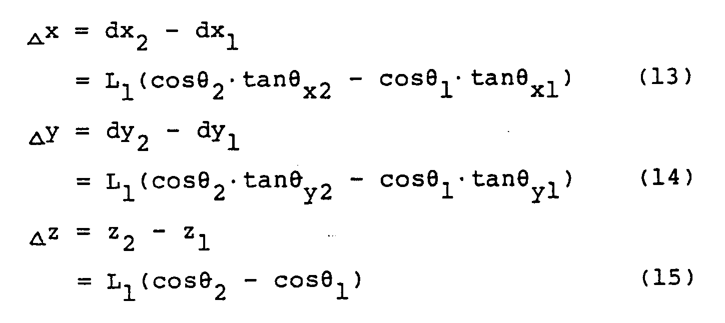
${\text{Δϑ}}_{\text{x}} {\text{= ϑ}}_{\text{x2}} {\text{- ϑ}}_{\text{x1}} \text{= tan⁻¹(L₂-L₁)/dℓ₁₂ (16)}$

${\text{Δϑ}}_{\text{y}} {\text{= ϑ}}_{\text{y2}} {\text{- ϑ}}_{\text{y1}} \text{= tan⁻¹(L₃-L₁)/dℓ₁₃ (17)}$

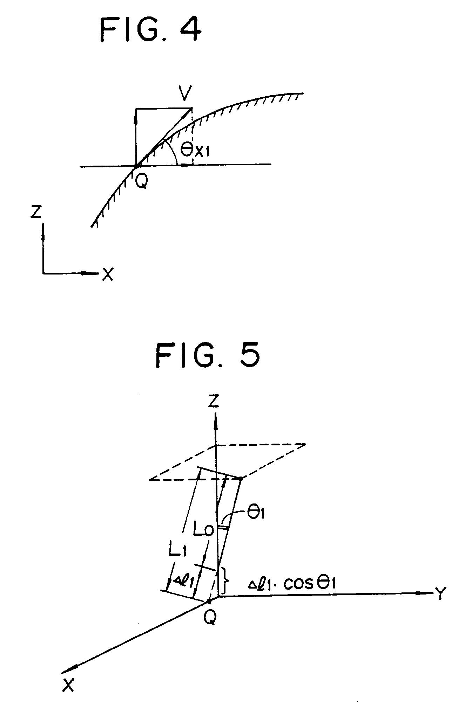

The foregoing is the description of the method of finding the incremental quantities along the three axes of the rectangular coordinate system and the two axes of rotation of the probe necessary for pointing the optic axis OP1 along the direction of the normal line without moving the measurement point that is the point of intersection between the optic axis OP1 and the model surface. However, contactless profiling of the model surface cannot be performed using solely the foregoing incremental quantities Δx, Δy, Δz, Δϑₓ, Δϑ_{y}. Reference will now be had to Figs. 4 and 5 to describe controlled variables for performing contactless profiling along the model surface.

In order to trace the model surface, where the XZ plane is adopted as the profiling plane, and where V is a commanded tracing velocity and ϑₓ₁ is the angle of inclination (the angle of the contact direction) at point Q on the model with respect to the probe feed axis (X axis) in the profiling plane of the XZ surface, it will suffice to effect movement at the velocities given by the equations

${\text{V}}_{\text{x}} {\text{= V·cosϑ}}_{\text{x1}}$
${\text{V}}_{\text{z}} {\text{= V·sinϑ}}_{\text{x1}}$

in the feed direction (X direction) and profiling direction (Z direction) and correct the Z-axis feed quantity by $\text{Δℓ₁ cosϑ₁}$ in such a manner that an error $\text{Δℓ₁ (= L₁ - L₀)}$ between the distance L₁ (see Fig. 5), which is measured by the distance measuring means DM1, and a reference distance L₀ becomes zero.

Accordingly, letting T_{S} represent the sampling time for computing the axial incremental quantities [Eqs. (13) - (17) which point the optic axis in the direction of the normal line, distances ΔX_{Q}, ΔZ_{Q} for travel at the velocities Vₓ, V_{y} during the sampling time are as follows:

${\text{ΔX}}_{\text{Q}} {\text{= V·cosϑ}}_{\text{x1}} {\text{·T}}_{\text{S}} \text{(18)}$

${\text{ΔZ}}_{\text{Q}} {\text{= V·sinϑ}}_{\text{x1}} {\text{·T}}_{\text{S}} \text{(19)}$

Therefore, it will suffice to add the abovementioned distances (incremental quantities) to the incremental quantities Δx, Δy indicated by Eqs. (13), (15) and correct the Z-axis incremental quantity by $\text{Δℓ₁ cosϑ₁}$ .

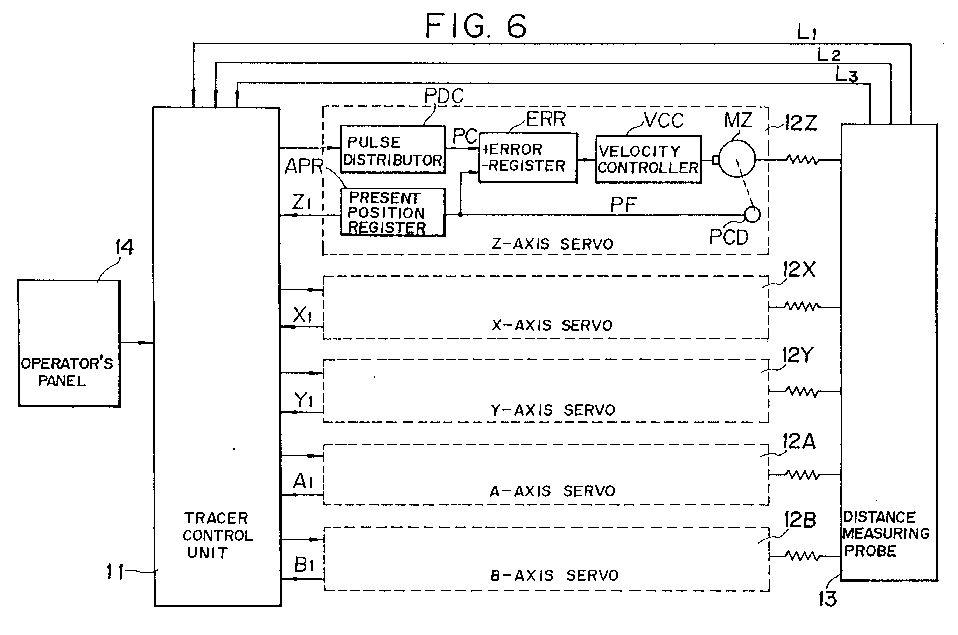

From the foregoing, axial incremental quantities every sampling time T_{S} for performing contactless profiling while the optic axis OP1 of the distance measuring means is pointed along the direction of the normal to the model surface, and in such a manner that the measured distance will become equal to the reference distance L₀, are given by the following: 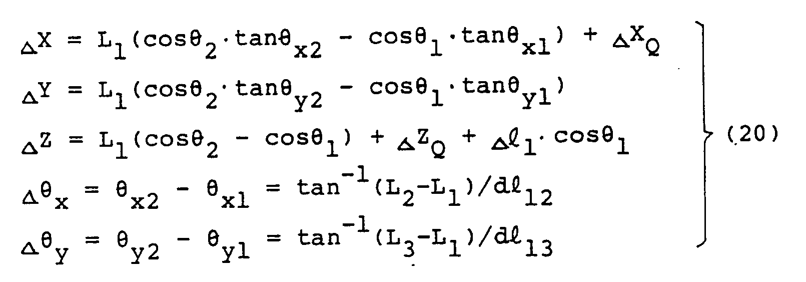
Fig. 6 is a block diagram of a system for practicing the contactless profiling method of the present invention.

Numeral 11 denotes a tracer control unit, 12Z a Z-axis servo-circuit, 12X an X-axis servo-circuit, 12Y a Y-axis servo-circuit, 12A an A-axis (e.g., an axis of rotation of the optic axis in the XZ profiling plane; see Fig. 1) servo-circuit, 12B a B-axis (e.g., an axis of rotation of the optic axis in a YZ cross-section perpendicular to the XZ profiling plane) servo-circuit, 13 a distance measuring probe having the arrangement of Fig. 1 and capable of simultaneously measuring distances to three points on the model, and 14 an operator's panel for setting various data needed for contactless profiling, such as the tracing velocity V, profiling method (assumed to the surface profiling), profiling plane, feed direction, pick-feed quantity, profiling range, etc.

The servo-circuits 12Z through 12B for the respective axes all have the same structure, so that only the Z-axis servo-circuit is shown. The Z-axis servo-circuit 12Z has a pulse distributing circuit PDC to which a Z-axis incremental value ΔZ is applied every sampling time T_{S} for performing a pulse distribution computation, an error register (up/down counter) ERR for accumulating command pulses outputted by the pulse distributing circuit, and for decrementing its content in the zero direction, in dependence upon actual movement, whenever a pulse PF is generated, a velocity control circuit VCC for controlling a servomotor based on an analog voltage proportional to the counted value in the error register, a Z-axis servomotor MZ, a pulse coder PCD for generating feedback pulses PF whenever the motor rotates through a predetermined angle, and a present position register APR for monitoring present position Z₁ along the Z axis by reversibly counting the feedback pulses PF in dependence upon the direction of movement. It should be noted that present positions ${\text{Z₁, X₁, Y₁, A₁ (= ϑ}}_{\text{x1}} \text{)}$ and ${\text{B₁ (= ϑ}}_{\text{y1}} \text{)}$ along the respective axes are read in from the servo-circuits 12Z - 12B of the respective axes.

The tracer control unit 11 reads the distances L₁ - L₃ to the three points on the model from the distance measuring probe every sampling time T_{S}, obtains the increments Δϑₓ, Δϑ_{y} of the angles of inclination of the normal line in the directions of the A axis and B axis in accordance with Eqs. (1) and (2), and obtains the angles ϑₓ₂, ϑ_{y2}, in the directions of the A and B axes, of the normal line in accordance with Eqs. (3) and (4). The angles ϑₓ₁, ϑ_{y1} in Eqs. 13), (4) use the contents of the present position registers in the A-axis servo-circuit 12A and B-axis servo-circuit 12B.

Next, the normal directions ϑ₁, ϑ₂ are obtained in accordance with Eqs. (5), (6), and (L₁-L₀) is adopted as Δℓ₁. Thereafter, the incremental quantities along the three axes of the rectangular coordinate system and the incremental quantities along the two axes of rotation are computed in accordance with Eq. (20), these quantities are inputted to the corresponding servo-circuits 12Z, 12X, 12Y, 12A and 12B, pulse distribution operations along the five axes are executed simultaneously, and the servomotors for the respective axes are rotated by the pulses obtained, thereby moving the distance measuring probe 13 along the surface of the model.

Thereafter, the tracer control unit repeats the foregoing processing every sampling time TS to perform contactless profiling of the model while the optic axis OP1 of the distance measuring means DM1 (see Fig. 1) is pointed in the direction of the line normal to the model surface, and in such a manner that the measured distance becomes equal to the reference distance L₀.

Digitizing data indicative of the model can be obtained by reading the present position along each axis, which position is stored in the present position register, every sampling time.

In accordance with the present invention as described above, the arrangement is such that the distances L₁ - L₃ to the three points on the model can be measured simultaneously, and such that contactless profiling is performed while the optic axis is pointed in the direction of the line normal to the model surface using the distances L₁ - L₃. This makes it possible to perform accurate contactless profiling and to enlarge the profiling range.

## Claims

1. A contactless profiling method for tracing a model (MDL) surface by a distance measuring probe (PRB) capable of measuring distances in contactless fashion,
characterized by:
said distance measuring probe (PRB) including first, second and third optical-type distance measuring means (DM1, DM2, DM3) wherein the first and the second optical-type distance measuring means (DM1, DM2) are located a predetermined distance apart in a probe feed direction (X), and the third optical-type distance measuring means (DM3) is located at a predetermined distance from the first optical-type distance measuring means (DM1) in a direction (Y) perpendicular to the probe feed direction, said three distance measuring means providing at predetermined sampling times T_{S} measurements of the distances (L₁, L₂, L₃) to at least the three points (A, B, C) on the model simultaneously;
computing a direction of a line (N₁) normal to the model from an inclination angle increment Δϑₓ in the probe feed direction (X) and an inclination angle increment Δϑ_{y} in a perpendicular direction (Y), which angles are obtained from measured distances (L₁, L₂) to two points (A, B) in the probe feed direction and measured distances (L₁, L₃) to two points (A, C) in a direction perpendicular to the feed direction, respectively;
obtaining total incremental quantities every sampling time T_{S} along the three axes of the rectangular coordinate system and two axes of probe rotation in said two directions (X, Y) by summing
(a) incremental quantities along the three axes of a rectangular coordinate system and the two axes of probe rotation, which incremental quantites are used for pointing an optic axis of the first distance measuring means (DM1) along said normal line direction(N₁) in a state where a measurement point (A), which is a point of intersection between said optic axis and the model surface is fixed;
(b) incremental quantities along the respective axes of the rectangular coordinate system, every predetermined sampling time T_{S}, determined from tracing velocity (V) and inclination angle (ϑₓ₁) in the probe feed direction; and
(c) a Z-axis component of an error (Δℓ₁) between the distance measured (L₁) by the first distance measuring means (DM1) every sampling time T_{S} and a reference distance (L₀); and
performing simultaneous five-axis control using said total incremental quantities along the respective axes to profile the model while said optic axis is pointed along the line normal (N₁) to the model.

2. A contactless profiling method according to claim 1, characterized by computing the inclination angle increment Δϑₓ in the probe feed direction (X) every sampling time T_{S} in accordance with the equation
${\text{Δϑ}}_{\text{x}} \text{= tan⁻¹(L₁-L₂)/dℓ₁₂}$
and computing the inclination angle increment Δϑ_{y} in the perpendicular direction (Y) every sampling time T_{S} in accordance with the equation
${\text{Δϑ}}_{\text{y}} \text{= tan⁻¹(L₁-L₃)/dℓ₁₃}$
where dℓ₁₂ represents spacing between the first and second optical-type distance measuring means (DM1, DM2) dℓ₁₃ represents spacing between the first and third optical-type distance measuring means (DM1, DM3), L₁, L₂ represent distances to two points in the probe feed direction measured every predetermined sampling time T_{S}, and L₁, L₃ represent distances to two points in a direction perpendicular to the probe feed direction measured every predetermined sampling time T_{S}.

3. A contactless profiling method according to claim 1, characterized by computing, every predetermined sampling time and in accordance with the following equations, inclination angles ϑₓ₂, ϑ_{y2} of said optic axis in the probe feed direction and perpendicular direction when said optic axis is pointing along the direction of the normal line:
${\text{ϑ}}_{\text{x2}} {\text{= ϑ}}_{\text{x1}} {\text{+ Δϑ}}_{\text{x}}$
${\text{ϑ}}_{\text{y2}} {\text{= ϑ}}_{\text{y1}} {\text{+ Δϑ}}_{\text{y}}$
where ϑₓ₁ represents inclination angle of the optic axis of the first distance measuring means (DM1) in the probe feed direction (X), and ϑ_{y1} represents inclination angle of the optic axis of the first distance measuring means (DM1) in the direction (Y) perpendicular to the probe feed direction.

4. A contactless profiling method according to claim 3, characterized by computing said incremental quantities Δx, Δy, Δz, Δϑₓ, Δϑ_{y} along the three axes of the rectangular coordinate system and the two axes of probe rotation, which quantities are used for pointing the optic axis along the direction of the normal line, in accordance with the equations
${\text{Δx = L₁(cosϑ₂·tanϑ}}_{\text{x2}} {\text{- cosϑ₁·tanϑ}}_{\text{x1}} \text{)}$
${\text{Δy = L₁(cosϑ₂·tanϑ}}_{\text{y2}} {\text{- cosϑ₁·tanϑ}}_{\text{y1}} \text{)}$
$\text{Δz = L₁(cosϑ₂ - cosϑ₁)}$
${\text{Δ ϑ}}_{\text{x}} \text{= tan⁻¹(L₂-L₁)/dℓ₁₂}$
${\text{Δ ϑ}}_{\text{y}} \text{= tan⁻¹(L₃-L₁)/dℓ₁₃}$
where
ϑ₁ = tan⁻¹ (√t̅a̅n̅²̅ϑ̅ₓ̅₁̅ +̅ t̅a̅n̅²̅ϑ̅_̅{̅y̅1̅}̅)
ϑ₂ = tan⁻¹ (√t̅a̅n̅²̅ϑ̅ₓ̅₂̅ +̅ t̅a̅n̅²̅ϑ̅_̅{̅y̅2̅}̅)

5. A contactless profiling method according to claim 4, characterized by computing every predetermined sampling time T_{S,} in accordance with the following equations, said incremental quantities ΔQ_{x,} ΔQ_{z} along the respective axes of the rectangular coordinate system,
determined from tracing velocity V and the inclination ϑₓ₁ in the probe feed direction:
${\text{ΔX}}_{\text{Q}} {\text{= V·cosϑ}}_{\text{x1}} {\text{·T}}_{\text{S}}$
${\text{ΔZ}}_{\text{Q}} {\text{= V·sinϑ}}_{\text{x1}} {\text{·T}}_{\text{S}}$

6. A contactless profiling method according to claim 1, characterized by calculating a point on the model surface from results obtained by carrying out contactless profiling, and digitizing this value.

## Patentansprüche

1. Kontaktloses Profilaufnahmeverfahren zum Aufnehmen bzw. Kopieren einer Modelloberfläche mittels einer Distanz-Meßsonde (PRB), die Entfernungen in kontaktloser Weise zu messen imstande ist,
**dadurch gekennzeichnet,**
daß die Distanz-Meßsonde (PRB) erste, zweite und dritte Distanz-Meßeinrichtungen (DM1, DM2, DM3) vom optischen Typ umfaßt, wobei die ersten und zweiten Distanz-Meßeinrichtungen (DM1, DM2) vom optischen Typ in einer bestimmten Entfernung voneinander in einer Sonden-Vorschubrichtung (X) und die dritte Distanz-Meßeinrichtung (DM3) vom optischen Typ in einer bestimmten Entfernung von der ersten Distanz-Meßeinrichtung (DM1) vom optischen Typ in einer rechtwinklig zu der Sonden-Vorschubrichtung verlaufenden Richtung angeordnet sind,
wobei die drei Distanz-Meßeinrichtungen zu bestimmten Abtastzeiten T_{S} Messungen der Entfernungen (L₁, L₂, L₃) zu zumindest drei Punkten (A, B, C) auf dem Modell gleichzeitig vornehmen,
daß die Richtung einer senkrecht zu dem Modell verlaufenden Linie (N₁) aus einem Neigungswinkelinkrement Δϑₓ in der Sonden-Vorschubrichtung (X) und einem Neigungswinkelinkrement Δϑ_{y} in einer rechtwinklig dazu verlaufenden Richtung (Y) berechnet wird, wobei die betreffenden Winkel aus den gemessenen Entfernungen (L₁, L₂) zu zwei Punkten (A, B) in der Sonden-Vorschubrichtung bzw. den gemessenen Entfernungen (L₁, L₃) zu zwei Punkten (A,C) in einer rechtwinklig zu der Vorschubrichtung verlaufenden Richtung, erhalten werden,
daß Gesamt-Inkrementalgrößen je Abtastzeit T_{S} längs der drei Achsen des rechtwinkligen Koordinatensystems und längs zweier Achsen der Sondendrehung in den genannten beiden Richtungen (X, Y) durch Summieren
(a) inkrementaler Größen längs der drei Achsen eines rechtwinkligen Koordinatensystems und der beiden Achsen der Sondendrehung, wobei die betreffenden inkrementalen Größen für das Einstellen einer optischen Achse der ersten Distanz-Meßeinrichtung (DM1) längs der Richtung der senkrecht zu dem Modell verlaufenden Linie (N₁) in einem Zustand benutzt wird, in welchem ein Meßpunkt (A), der ein Schnittpunkt zwischen der optischen Achse und der Modelloberfläche ist, festliegt,
(b) inkrementaler Größen längs der betreffenden Achsen des rechtwinkligen Koordinatensystems zur jeweils bestimmten Abtastzeit T_{S}, die aus der Aufnahmegeschwindigkeit (V) und einem Neigungswinkel (ϑₓ₁) in der Sonden-Vorschubrichtung bestimmt ist,
und (c) einer Z-Achsen-Komponente eines Fehlers (Δℓ₁) zwischen der durch die erste Distanz-Meßeinrichtung (DM1) zur jeweiligen Abtastzeit T_{S} gemessenen Distanz und einer Referenzdistanz (L₀) erhalten werden,
und daß gleichzeitig eine Fünf-Achsen-Steuerung unter Heranziehung der Gesamt-Inkrementalgrößen längs der betreffenden Achsen zur Profilaufnahme des Modells ausgeführt wird, währenddessen die optische Achse längs der rechtwinklig zum Modell verlaufenden Linie ausgerichtet ist.

2. Verfahren nach Anspruch 1, **dadurch gekennzeichnet,** daß das Neigungswinkelinkrement (Δϑₓ) in der Sonden-Vorschubrichtung (X) zu jeder Abtastzeit T_{S} entsprechend der Gleichung
${\text{Δϑ}}_{\text{x}} \text{= tan⁻¹(L₁-L₂)/dℓ₁₂}$
berechnet wird
und daß das Neigungswinkelinkrement Δϑ_{y} in der senkrechten Richtung (Y) je Abtastzeit T_{S} in Übereinstimmung mit der Gleichung
${\text{Δϑ}}_{\text{y}} \text{= tan⁻¹(L₁-L₃)/dℓ₁₃}$
berechnet wird, wobei dℓ ₁₂ den Abstand zwischen den ersten und zweiten Distanz-Meßeinrichtungen (DM1, DM2) vom optischen Typ, dℓ₁₃ den Abstand zwischen den ersten und dritten Distanz-Meßeinrichtungen (DM1, DM3) vom optischen Typ, L₁, L₂ die Entfernungen zu zwei Punkten in der Sonden-Vorschubrichtung, gemessen zur jeweils bestimmten Abstastzeit T_{S}, und L₁, L₃ Entfernungen zu zwei Punkten in einer rechtwinklig zu der Sonden-Vorschubrichtung verlaufenden Richtung, gemessen zur jeweiligen bestimmten Abtastzeit T_{S}, angeben.

3. Verfahren nach Anspruch 1, **dadurch gekennzeichnet,** daß zur jeweils bestimmten Abtastzeit und in Übereinstimmung mit den Gleichungen
${\text{ϑ}}_{\text{x2}} {\text{= ϑ}}_{\text{x1}} {\text{+ Δϑ}}_{\text{x}}$
${\text{ϑ}}_{\text{y2}} {\text{= ϑ}}_{\text{y1}} {\text{+ Δϑ}}_{\text{y}} \text{,}$
Neigungswinkel (ϑₓ₂, ϑ_{y2}) der optischen Achse in der Sonden-Vorschubrichtung und in der rechtwinklig dazu verlaufenden Richtung in dem Fall berechnet werden, daß die optische Achse längs der Richtung der senkrechten Linie verläuft, wobei ϑₓ₁ den Neigungswinkel der optischen Achse der ersten Distanz-Meßeinrichtung (DM1) in der Sonden-Vorschubrichtung und ϑ_{y1} den Neigungswinkel der optischen Achse der ersten Distanz-Meßeinrichtung (DM1) in der rechtwinklig zu der Sonden-Vorschubrichtung verlaufenden Richtung (Y) bedeuten.

4. Verfahren nach Anspruch 3, **dadurch gekennzeichnet,** daß die Inkrementalgrößen Δx, Δy, Δz, Δϑₓ, Δϑ_{y}, die für die Ausrichtung der optischen Achse längs der Richtung der senkrecht zu dem Modell verlaufenden Linie herangezogen werden, längs der drei Achsen des rechtwinkligen Koordinatensystems und der beiden Achsen der Sondendrehung in Übereinstimmung mit den folgenden Gleichungen
${\text{Δx = L₁(cosϑ₂·tanϑ}}_{\text{x2}} {\text{- cosϑ₁·tanϑ}}_{\text{x1}} \text{)}$
${\text{Δy = L₁(cosϑ₂·tanϑ}}_{\text{y2}} {\text{- cosϑ₁·tanϑ}}_{\text{y1}} \text{)}$
$\text{Δz = L₁(cosϑ₂ - cosϑ₁)}$
${\text{Δ ϑ}}_{\text{x}} \text{= tan⁻¹(L₂-L₁)/dℓ₁₂}$
${\text{Δ ϑ}}_{\text{y}} \text{= tan⁻¹(L₃-L₁)/dℓ₁₃),}$
berechnet werden, wobei
ϑ₁ = tan⁻¹ (√t̅a̅n̅²̅ϑ̅ₓ̅₁̅ +̅ t̅a̅n̅²̅ϑ̅_̅{̅y̅1̅}̅)
ϑ₂ = tan⁻¹ (√t̅a̅n̅²̅ϑ̅ₓ̅₂̅ +̅ t̅a̅n̅²̅ϑ̅_̅{̅y̅2̅}̅)
gilt.

5. Verfahren nach Anspruch 4, **dadurch gekennzeichnet,** daß zu jeder bestimmten Abtastzeit T_{S} in Übereinstimmung mit den Gleichungen
${\text{ΔX}}_{\text{Q}} {\text{= V·cosϑ}}_{\text{x1}} {\text{·T}}_{\text{S}}$
${\text{ΔZ}}_{\text{Q}} {\text{= V·sin ϑ}}_{\text{x1}} {\text{·T}}_{\text{S}}$
die Inkrementalgrößen ΔQₓ, ΔQ_{z} längs der entsprechenden Achsen des rechtwinkligen Koordinatensystems aus der Aufnahmegeschwindigkeit V und dem Neigungswinkel ϑₓ₁ in der Sonden-Vorschubrichtung berechnet werden.

6. Verfahren nach Anspruch 1, **dadurch gekennzeichnet,** daß ein Punkt auf der Modelloberfläche aus Ergebnissen berechnet wird, die durch kontaktlose Profilaufnahme erhalten werden, und daß dieser Wert digitalisiert wird.

## Revendications

1. Un procédé de profilage sans contact pour suivre la surface d'un modèle (MDL) par un capteur (PRB) de mesure de distance capable de mesurer des distances sans venir en contact, caractérisé par :
le fait que ledit capteur (PRB) de mesure de distance comprend de premier, second et troisième moyens (DM₁, DM₂, DM₃) de mesure de distance de type optique dans lequel le premier et le second moyen (DM₁, DM₂) de mesure de distance de type optique sont situés a une distance prédéterminée dans une direction (X) d'avance du capteur et le troisième moyen (DM₃) de mesure de distance de type optique est placé à une distance prédéterminée du premier moyen (DM₁) de mesure de distance de type optique dans une direction (Y) perpendiculaire à la direction d'avance du capteur, lesdits trois moyens de mesure de distance assurant, à des temps d'échantillonnage T_{S} prédéterminés, les mesures des distances (L₁, L₂, L₃) au moins aux trois points (A, B, C) du modèle, de manière simultanée ;
le calcul d'une direction d'une ligne (N₁) perpendiculaire au modèle à partir d'un incrément d'angle d'inclinaison Δϑₓ dans la direction (X) d'avance du capteur et d'un incrément d'angle d'inclinaison Δϑ_{y} dans une direction (Y) perpendiculaire, ces angles étant obtenus à partir de distances (L₁, L₂) mesurées à deux points (A, B) dans la direction d'avance du capteur et de distances (L₁, L₃) mesurées à deux points (A, C) dans une direction perpendiculaire à la direction d'avance, respectivement ;
l'obtention de l'ensemble des quantités incrémentielles à chaque temps d'échantillonnage T_{S} le long des trois axes du système de coordonnées rectangulaires et des deux axes de rotation du capteur dans lesdites deux directions (X, Y) en additionnant
(a) des quantités incrémentielles le long des trois axes d'un système de coordonnées rectangulaires et des deux axes de rotation du capteur, ces quantités incrémentielles étant utilisées pour pointer un axe optique du premier moyen (DM₁) de mesure de distance le long de ladite direction (N₁) de la ligne perpendiculaire dans un état où un point de mesure (A), qui est un point d'intersection entre ledit axe optique et la surface du modèle, est fixe ;
(b) des quantités incrémentielles le long des axes respectifs du système de coordonnées rectangulaires à chaque temps d'échantillonnage prédéterminés T_{S}, déterminées à partir de la vitesse de suivi (V) et de l'angle d'inclinaison (ϑₓ₁) dans la direction d'avance du capteur ; et
(c) une composante d'axe (Z) d'une erreur (Δℓ₁) entre la distance (L₁) mesurée par le premier moyen (DM₁) de mesure de distance à chaque temps d'échantillonnage T_{S} et une distance (Z₀) de référence ; et
la réalisation d'une commande simultanée à cinq axes en utilisant ledit ensemble de quantités incrémentielles le long des axes respectifs pour profiler le modèle tandis que ledit axe optique est pointé le long de la ligne (N₁) perpendiculaire au modèle.

2. Un procédé de profilage sans contact selon la revendication 1, caractérisé par le calcul de l'incrément Δϑₓ de l'angle d'inclinaison dans la direction (X) d'avance du capteur à chaque temps d'échantillonnage T_{S} en accord avec la relation
${\text{Δϑ}}_{\text{x}} \text{= Arc tg (L₁-L₂)/dℓ₁₂}$
et le calcul de l'incrément Δϑ_{y} de l'angle d'inclinaison dans la direction perpendiculaire (Y) à chaque temps d'échantillonnage T_{S} en accord avec la relation
${\text{Δϑ}}_{\text{y}} \text{= Arc tg (L₁-L₃)/dℓ₁₃}$
où dℓ₁₂ représente l'écartement entre le premier et le second moyen (DM₁, DM₂) de mesure de distance de type optique, dℓ₁₃ représente l'écartement entre le premier et le troisième moyen (DM₁, DM₃) de mesure de distance de type optique, L₁, L₂ représentent les distances à deux points dans la direction d'avance du capteur mesurée à chaque temps d'échantillonnage prédéterminés T_{S}, et L₁, L₃ représentent des distances à deux points dans une direction perpendiculaire à la direction d'avance du capteur mesurée à chaque temps d'échantillonnage prédéterminé T_{S}.

3. Un procédé de profilage sans contact selon la revendication 1, caractérisé par le calcul, à chaque temps d'échantillonnage prédéterminé et en accord avec les relations suivantes, des angles d'inclinaison ϑₓ₂, ϑ_{y2} dudit axe optique dans la direction d'avance du capteur et dans la direction perpendiculaire quand ledit axe optique pointe dans la direction de la ligne perpendiculaire :
${\text{ϑ}}_{\text{x2}} {\text{= ϑ}}_{\text{x1}} {\text{+ Δϑ}}_{\text{x}}$
${\text{ϑ}}_{\text{y2}} {\text{= ϑ}}_{\text{y1}} {\text{+ Δϑ}}_{\text{y}}$
où ϑₓ₁ représente l'angle d'inclinaison de l'axe optique du premier moyen (DM₁) de mesure de distance dans la direction (X) d'avance du capteur, et ϑ_{y1} représente l'angle d'inclinaison de l'axe optique du premier moyen (DM₁) de mesure de distance dans la direction (Y) perpendiculaire à la direction d'avance du capteur.

4. Un procédé de profilage sans contact selon la revendication 3, caractérisé par le calcul desdites quantités incrémentielles Δx, Δy, Δz, Δ ϑₓ, Δ ϑ_{y} le long des trois axes du système de coordonnées rectangulaires et des deux axes de rotation du capteur, ces quantités étant utilisées pour pointer l'axe optique dans la direction de la ligne perpendiculaire en accord avec les relations
${\text{Δx = L₁ (cosϑ₂·tgϑ}}_{\text{x2}} {\text{- cosϑ₁·tgϑ}}_{\text{x1}} \text{)}$
${\text{Δy = L₁ (cosϑ₂·tgϑ}}_{\text{y2}} {\text{- cosϑ₁·tgϑ}}_{\text{y1}} \text{)}$
$\text{Δz = L₁ (cosϑ₂- cosϑ₁)}$
${\text{Δ ϑ}}_{\text{x}} \text{= Arc tg (L₂-L₁)/dℓ₁₂}$
${\text{Δ ϑ}}_{\text{y}} \text{= Arc tg (L₃-L₁)/dℓ₁₃}$
où
ϑ₁ = Arc tg (√t̅g̅²̅ϑ̅ₓ̅₁̅ +̅ t̅g̅²̅ϑ̅_̅{̅y̅1̅}̅)
ϑ₂ = Arc tg (√t̅g̅²̅ϑ̅ₓ̅₂̅ +̅ t̅g̅²̅ϑ̅_̅{̅y̅2̅}̅)

5. Un procédé de profilage sans contact selon la revendication 4, caractérisé par le calcul, à chaque temps d'échantillonnage prédéterminé T_{S}, en accord avec les relations suivantes, desdites quantités incrémentielles ΔQₓ, ΔQ_{z} le long des axes respectifs du système de coordonnées rectangulaires, déterminées à partir de la vitesse de suivi V et de l'inclinaison ϑₓ₁ dans la direction d'avance du capteur :
${\text{ΔX}}_{\text{Q}} {\text{= V·cosϑ}}_{\text{x1}} {\text{·T}}_{\text{S}}$
${\text{ΔZ}}_{\text{Q}} {\text{= V·sinϑ}}_{\text{x1}} {\text{·T}}_{\text{S}}$

6. Un procédé de profilage sans contact selon la revendication 1, caractérisé par le calcul d'un point sur la surface du modèle à partir de résultats obtenus en mettant en oeuvre le profilage sans contact et la numérisation de cette valeur.
